# EUROPEAN PATENT APPLICATION

(11) **EP 4 492 110 A2**
(43) Date of publication of application: **15.01.2025**
(21) Application number: 24186842.1
(22) Date of filing: 05.07.2024
(51) Int. Cl.: G02B 6/44

(54) **HIGH-DENSITY FIBER ENCLOSURE**

(30) Priority: 10.07.2023 IN 202311046113
(71) Applicant: Sterlite Technologies Limited, Gurugram, Haryana 122102 (IN)
(72) Inventor: TAYLOR, Chris, Cheltenham, GL528SR (GB)
(74) Representative: Valet Patent Services Limited

(57) **Abstract**

The present invention relates to a high-density fiber enclosure (101) comprising a housing (102), inlet ports (103) to receive cables (122) in the housing (102), output ports (104) and port glands (105) adapted to be inserted into the output ports (104). In particular, each port gland (105) receives a plurality of drop fiber cables. Further, each port gland includes a first end (106) partially embedded inside one or more output ports (104), a second end (107), and a connecting passage (108) between the first end (106) and second end making a passage for the plurality of optical fibers (121) such that number of drop fiber cables (110) is equal to the number of optical fibers (121).

## Description

### Cross-Reference to Related Applications

This application claims the benefit of Indian Application No. "202311046113" titled " **HIGH-DENSITY FIBER ENCLOSURE"** filed by the applicant on ......, which is incorporated herein by reference in its entirety.

### Field of the Invention

Embodiments of the present invention relate to the field of telecommunication cable routing systems, and more particularly, relate to a high-density fiber enclosure.

### Description of the Related Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information.

An increasing number of users for high-speed optical fiber communication networks is increasing network density and making it more difficult to accommodate the optical fiber cables. Due to the development of optical fiber communication, extremely dense optical communication networks are now necessary, which calls for high-density cables and accessories. Further, high-density enclosures are needed in the network due to the increase in need of data connectivity. Contemporary solutions for optical fiber communication have enclosures with one exit port for each output drop cable which is not suitable for high-density enclosures.

Prior art reference US2022252817A1 discloses an optical fiber fanout assembly having a fanout device to route plurality of optical fibers via separate paths to be used with a fiber termination housing.

Another prior-art reference US9548601B2 discloses a fiber breakout assembly which is environmentally sealed and includes a fiber splice puck assembly. The fiber splice puck assembly includes plurality of input fiber at one end in a single hole and plurality of output fibers at other end with multiple holes.

Yet other prior-art references US9575277B2 and US11067759B2 disclose breakout assembly having a connecting end for routing individual fiber cables as output.

However, the above prior art references do not provide a stable solution for high-density enclosures that can be used for accommodation of high-density optical fiber networks. Further, as seen in prior art references such as US2022252817A1, US9548601B2, and US9575277B2, offer fiber fanout or breakout assemblies, but they lack stability for high-density enclosures. These solutions do not provide a comprehensive and stable solution for accommodating high-density optical fiber networks.

Accordingly, to overcome the disadvantages of the prior arts, there is an urgent need for a stable and efficient optical fiber enclosure persists due to the limitations of existing solutions that overcomes the above stated disadvantages of conventional optical fiber enclosures. Thus, there is a need of a high-density fiber enclosure capable of addressing the challenges associated with increased network density is necessary to facilitate the accommodation of optical fiber cables. Hence, the present disclosure provides a high-density fiber enclosure.

### SUMMARY OF THE INVENTION

Embodiments of the present invention relates to a high-density fiber enclosure comprising a housing, one or more inlet ports configured to receive one or more cables in the housing, one or more output ports, and one or more port glands adapted to be inserted into the one or more output ports. In particular, each port gland of the one or more port glands is configured to receive a plurality of drop fiber cables. Further, each port gland of the one or more port glands comprises
- a first end, defined by a first area (A1), that is at least partially embedded inside the one or more output ports;
- a second end , defined by a second area (A2), and the second area (A2) is greater than the first area (A1); and
- a connecting passage between the first end and second end. The connecting passage allows passage of a plurality of optical fibers such that a number of drop fiber cables is equal to the number of plurality of optical fibers.

In accordance with an embodiment of present invention, the connecting passage has a plurality of longitudinal compartments such that each longitudinal compartment of the plurality of longitudinal compartments is configured to house one optical fiber. In particular, each longitudinal compartment of the plurality of longitudinal compartments is separated from one another. Further, each longitudinal compartment of the plurality of longitudinal compartments has at least one walled region and an open peripheral zone defining an area of the connecting passage.

In accordance with an embodiment of present invention, the second end comprises a plurality of outlets adapted to connect a plurality of drop cables.

In accordance with an embodiment of present invention, each port gland of the one or more port glands are cylindrical shaped. Further, each port gland of the one or more port glands comprises the plurality of longitudinal compartments that are separated from one another.

In accordance with an embodiment of present invention, each port gland of the one or more port glands further comprises a shoulder at the second end to restrict an insertion of a port gland of the one or more port glands into the output port at a predefined position.

In accordance with an embodiment of present invention, each port gland of the one or more port glands also comprises a plurality of fingers disposed on a periphery of the first end.

In accordance with an embodiment of present invention, the high-density fiber enclosure further comprises a cylindrical sealing element configured to be inserted into the plurality of fingers of a port gland of the one or more port glands.

In accordance with an embodiment of present invention, each port gland of the one or more port glands further includes a threaded portion at the first end to removably engage the one or more port glands inside the housing.

In accordance with an embodiment of present invention, the high-density fiber enclosure also comprises one or more coupling nuts. In particular, each coupling nut of the one or more coupling nuts is adapted to be engaged with the threaded portion of a port gland of the one or more port glands to removably engage the port gland of the one or more port glands inside the housing.

In accordance with an embodiment of present invention, the output ratio of the high-density fiber enclosure is less than 200.

The foregoing objectives of the present invention are attained by providing a high-density fiber enclosure.

### BRIEF DESCRIPTION OF THE DRAWINGS

So that the manner in which the above-recited features of the present invention is understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

The invention herein will be better understood from the following description with reference to the drawings, in which:
Fig. 1A is a pictorial snapshot illustrating an isometric view of a high-density fiber enclosure in accordance with an embodiment of the present invention;
Fig. 1B is a pictorial snapshot illustrating a front view of the high-density fiber enclosure in accordance with an embodiment of the present invention;
Fig. 1C is a pictorial snapshot illustrating an isometric view of a port gland in accordance with an embodiment of the present invention;
Fig. 1D is a pictorial snapshot illustrating a distal perspective view of the port gland in accordance with an embodiment of the present invention;
Fig. 1E is a pictorial snapshot illustrating a proximal perspective view of the port gland in accordance with an embodiment of the present invention;
Fig. 1F is a pictorial snapshot illustrating an optical fiber coupled to a plurality of drop cables via the port gland in accordance with an embodiment of the present invention;
Fig. 2 is a pictorial snapshot illustrating a side view of the port gland in accordance with an embodiment of the present invention;
Fig. 3 is a pictorial snapshot illustrating a front expanded view of an output port in accordance with an embodiment of the present invention.

The high-density fiber enclosure is illustrated in the accompanying drawings, which like reference letters indicate corresponding parts in the various figures. It should be noted that the accompanying figure is intended to present illustrations of exemplary embodiments of the present invention. This figure is not intended to limit the scope of the present invention. It should also be noted that the accompanying figure is not necessarily drawn to scale.

### DETAILED DESCRIPTION OF THE INVENTION

The principles of the present invention and their advantages are best understood by referring to figures. In the following detailed description, numerous specific details are set forth in order to provide a thorough understanding of the embodiment of the invention as illustrative or exemplary embodiments of the invention, specific embodiments in which the invention may be practiced are described in sufficient detail to enable those skilled in the art to practice the disclosed embodiments. However, it will be obvious to a person skilled in the art that the embodiments of the invention may be practised with or without these specific details. In other instances, well-known methods, procedures and components have not been described in detail so as not to unnecessarily obscure aspects of the embodiments of the invention.

The following detailed description is, therefore, not to be taken in a limiting sense, and the scope of the present invention is defined by the appended claims and equivalents thereof. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. References within the specification to "one embodiment," "an embodiment," "embodiments," or "one or more embodiments" are intended to indicate that a particular feature, structure, or characteristic described in connection with the embodiment is included in at least one embodiment of the present invention.

Although the terms first, second, etc. may be used herein to describe various elements, these elements should not be limited by these terms. These terms are generally only used to distinguish one element from another and do not denote any order, ranking, quantity, or importance, but rather are used to distinguish one element from another. Further, the terms "a" and "an" herein do not denote a limitation of quantity, but rather denote the presence of at least one of the referenced items.

The conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

**The following brief definition of terms shall apply throughout the present invention:**
Term "housing" as used herein is referred to as a closed structure configured to enclose one or more inlet ports and one or more output ports.
Term "drop fiber cable" as used herein is referred to as a cable that run from the distribution point to the subscriber or user.
Term "splitter" as used herein is referred to as a device configured to split an optical fiber cable signal into two or more optical fiber cable signals.
Term "port gland" as used herein is referred to as a device designed to attach the high-density fiber enclosure to the drop fiber cables.
Term "terminal box" as used herein is referred to as the external junction box at which the optical fiber cable connects with the user's internal cable.
Term "output ratio" as used herein is referred to as a volume of the high-density fiber enclosure of each longitudinal passage of the one or more passages.
Term "distal perspective view" as used herein is referred to as a perspective isometric view of the port gland from a distal end of the port gland.
Term "proximal perspective view" as used herein is referred to as "a perspective isometric view of the port gland from a proximal end of the port gland.
Term "volume per drop cable" as used herein is referred to as a volume of the high-density fiber enclosure that is dedicated for each drop cable of the plurality of drop fiber cables.

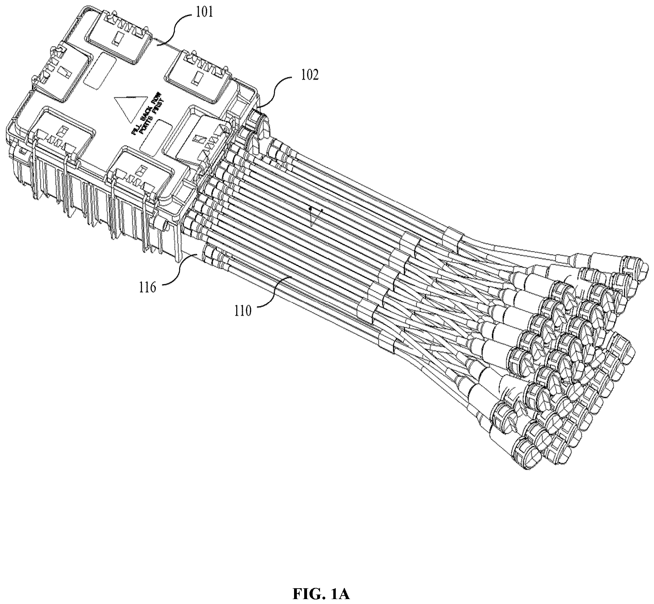

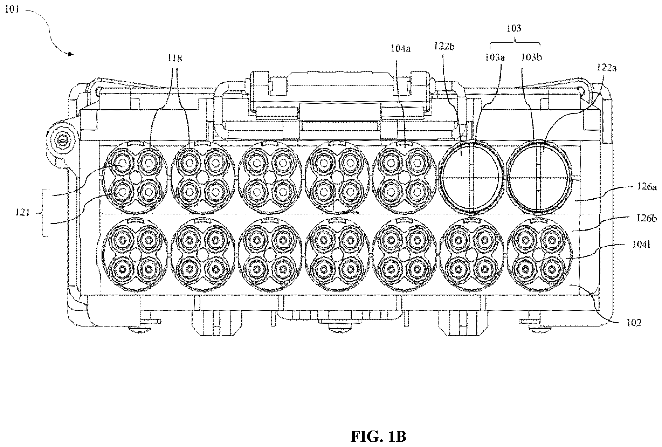

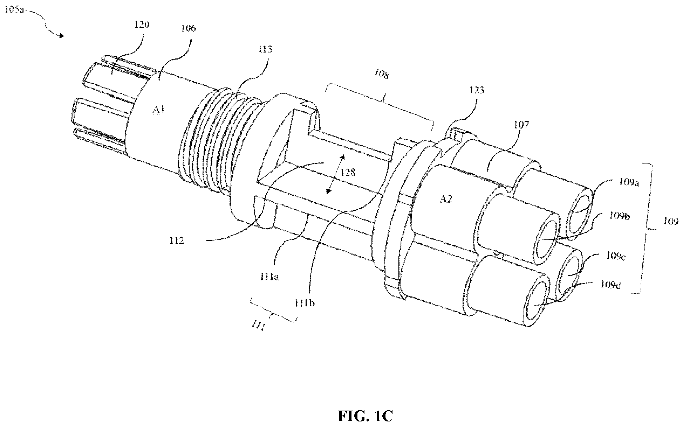

Fig. 1A and Fig. 1B are pictorial snapshots illustrating an isometric and front view of the high-density fiber enclosure in accordance with various embodiments of the present invention. In particular, the high-density fiber enclosure 101 includes a housing 102, one or more inlet ports 103, and one or more output ports 104. Moreover, the one or more output ports 104 may enable a plurality of drop fiber cables 110 to connect to the high-density fiber enclosure 101. In some aspects of the present invention, the plurality of drop fiber cables 110 may be covered by way of a hollow tubular sleeve 116 at a junction of the housing 102 and the plurality of drop fiber cables 110. Further, the hollow tubular sleeve 116 may be a hollow structure that may be external to the housing 102 and may be configured to accommodate the one or more port glands 105 (shown as "port gland 105a" later in FIG. 1C)

In accordance with an embodiment of present invention, the one or more inlet ports 103 may be configured to receive one or more cables 122 in the housing 102. In particular, the one or more inlet ports 103 may have two inlet ports (i.e., a first inlet port 103a and a second inlet port 103b). In alternative embodiments the high-density fiber enclosure 101 may have more than two inlet ports. It will be apparent to a person skilled in the art that the one or more inlet ports 103 may have any number of inlet ports, without deviating from the scope of the present invention. In such a scenario, each inlet port of the one or more inlet ports 103 is adapted to serve one or more functionalities in a manner similar to the functionalities of the first inlet port 103a and the second inlet port 103b as described.

In accordance with an embodiment of present invention, one or more cables 122 may be configured to carry input optical signals to the high-density fiber enclosure 101. In particular, each inlet port of the one or more inlet ports 103 may be adapted to receive one cable of the one or more cables 122. Moreover, the first inlet port 103a may be configured to receive a first cable 122a of the one or more cables 122, and the second inlet port 103b may be configured to receive a second cable 122b of the one or more cables 122. Further, each cable of the one or more cables 122 may have one or more optical fibers.

In accordance with an embodiment of present invention, the one or more output ports 104 may be configured to receive one or more port glands 105. Each port gland of the one or more port glands 105 may be configured to receive the plurality of drop fiber cables 110. Particularly, the one or more output ports 104 may have twelve output ports (i.e., first through twelfth output ports shown as 104a-1041).

In this embodiment, the high-density fiber enclosure 101 has twelve output ports (i.e., the first through twelfth output ports shown as 104a-104l). In various other aspects, the one or more output ports 104 may have any number of output ports, without deviating from the scope of the present invention. In such a scenario, each output port of the one or more output ports 104 is adapted to serve one or more functionalities in a manner similar to the functionalities of the first through twelfth output port 104a-104l as described above.

In accordance with an embodiment of the present invention, the one or more inlet ports 103 and the one or more output ports 104 may be aligned in two rows (i.e., an upper row 126a and a lower row 126b). And, due to the presence of the hollow sleeves 116 the length of one or more upper port glands (i.e., port glands of the one or more port glands 105 in the upper row 126a) may be less than a length of one or more lower port glands (i.e., port glands of the one or more port glands 105 in the lower row 126b) to avoid entangling of the plurality of drop cables 110.

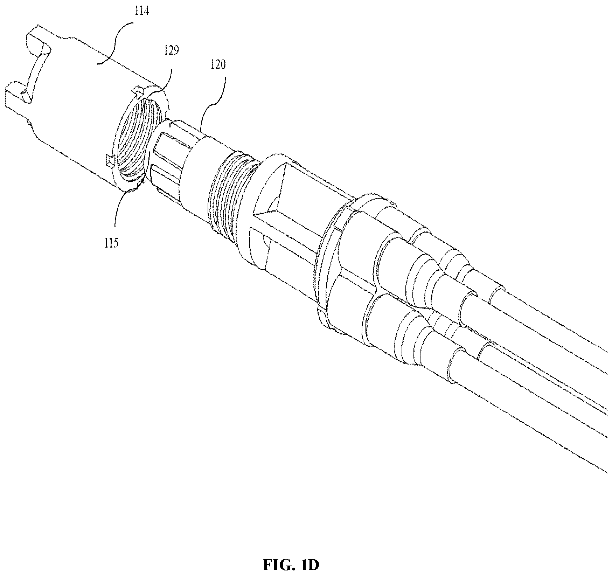

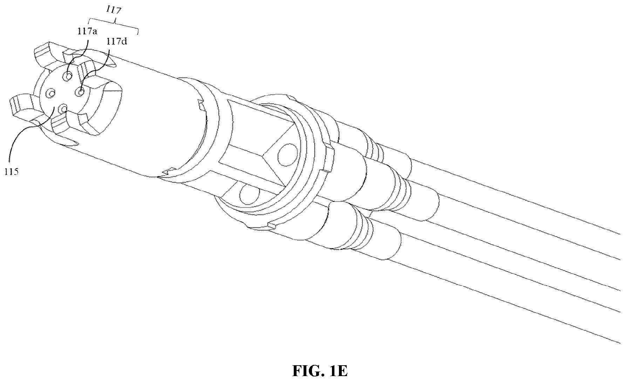

Fig. 1C, Fig. 1D and Fig. 1E are pictorial snapshots illustrating isometric view, distal perspective view and proximal perspective view of the port gland 105a of one or more port glands 105 in accordance with an embodiment of the present invention. In particular, the one or more port glands 105 may be adapted to be inserted into the one or more output ports 104. Moreover, the port gland 105a may have a first end 106, a second end 107, and a connecting passage 108 between the first end 106 and the second end 107. Further, the first end 106 may be partially embedded inside the one or more output ports 104 and may be defined by a first area (A1).

In some aspects of the present invention, the first end 106 may have a plurality of fingers 120 disposed on a periphery of the first end 106. Alternatively, the first end 106 may further have a threaded portion 113 to removably engage the port gland 105a inside the housing 102.

In accordance with an embodiment of the present invention, the second end 107 may have one or more outlets 109 that may be adapted to enable the port gland 105a to couple with the plurality of drop cables 110. In particular, the second end 107 may be defined by a second area (A2). The second area A2 may be greater than the first area A1. Further, the drop cables 110 may be terminated with one or more optical fiber hardened connectors 119 (hereinafter interchangeably referred to and designated as "one or more connectors 119") at the second end 107.

In accordance with an embodiment of the present invention, the connecting passage 108 may be configured to allow passage of a plurality of optical fibers 121 such that a number of the plurality of drop fiber cables 110 is equal to the number of optical fibers 121.

Further, the connecting passage 108 may have a plurality of longitudinal compartments 112. Each longitudinal compartment of the plurality of longitudinal compartments 112 may be configured to house one optical fiber of the plurality of optical fibers 121.

In some embodiments, each longitudinal compartment of the plurality of longitudinal compartments 112 may be separated from one another. In alternative embodiments, each longitudinal compartment of the plurality of longitudinal compartments 112 may have at least one walled region 111 and an open peripheral zone 128 that may define an area of the connecting passage 108.

In accordance with an embodiment of the present invention, the area of the connecting passage 108 may be greater than 1100 milli meter square (mm²).

In accordance with an embodiment of the present invention, the port gland 105a may have a shoulder 123 at the second end 107 that may restrict an insertion of the port gland 105a into the one or more output ports 104 at a predefined position.

In accordance with an embodiment of the present invention, the high-density fiber enclosure 101 may further have a coupling nut 114 that may be adapted to be engaged with the threaded portion 113 of the port gland 105a of the one or more port glands 105 to removably engage the port gland 105a inside the housing 102. The coupling nut 114 may have an internal threaded portion 129 that may act as a female coupler to enable coupling of the coupling nut 114 with the threaded portion 113 of the port gland 105a.

In accordance with an embodiment of the present invention, the high-density fiber enclosure 101 may further have a cylindrical sealing element 115 configured to be inserted into the plurality of fingers 120 of the port gland 105a of the one or more port glands 105. In particular, the cylindrical sealing element 115 may be configured to environmentally seal the port gland 105a of the one or more port glands 105 with the coupling nut 114 such that when the coupling nut 114 is engaged, the plurality of fingers 120 captures the cylindrical sealing element 115 tightly. Further, the cylindrical sealing element 115 may provide sealing to the port gland 105a, when a dust cap 127 of a connector of the one or more connectors 119 is left off.

In accordance with an embodiment of the present invention, the cylindrical sealing element 115 may have one or more longitudinal passages 117 configured to facilitate the plurality of optical fibers 121 to enter the connecting passage 108. The number of longitudinal passages 117, number of the optical fibers of the plurality of optical fibers 121, and number of the plurality of longitudinal compartments 112 may be the same. This may enable each optical fiber of the plurality of optical fibers 121 to enter one longitudinal compartment of the plurality of longitudinal compartments 112 via one longitudinal passage of the one or more longitudinal passages 117. Particularly, the one or more longitudinal passages 117 may have four longitudinal passages (i.e., first through fourth longitudinal passages 117a-117d). Although FIG. 1E illustrates that one or more longitudinal passages 117 have four longitudinal passages (i.e., the first through fourth longitudinal passages 117a-117d), it will be apparent to a person skilled in the art that the scope of the present invention is not limited to it. In alternative aspects, the one or more longitudinal passages 117 may have any number of longitudinal passages without deviating from the scope of the present invention, that may depend on the number of the optical fibers 121 and/or the number of longitudinal compartments 112. In such a scenario, each longitudinal passage of the one or more longitudinal passages 117 is adapted to serve one or more functionalities in a manner similar to the functionalities of the first through fourth longitudinal passages 117a-117d as described.

Alternatively, the number of longitudinal passages 117, number of the optical fibers of the plurality of optical fibers 121, and number of the plurality of longitudinal compartments 112 may be different.

In accordance with an embodiment of the present invention, an output ratio of the high-density fiber enclosure 101 may be less than 200. The term "output ratio" is volume of the high-density fiber enclosure 101 of each longitudinal passage of the one or more longitudinal passages 117.

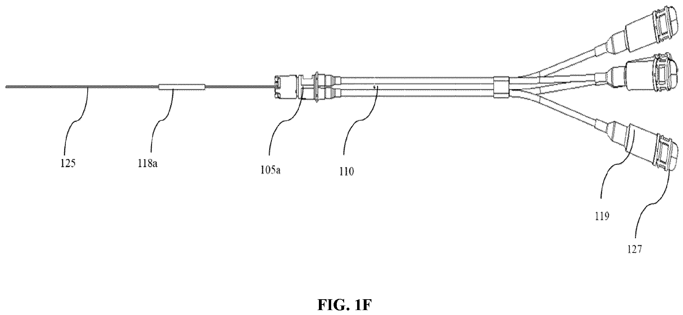

Fig. 1F is a pictorial snapshot illustrating an optical fiber 125 coupled to a plurality of drop cables 110 via the port gland 105a in accordance with an embodiment of the present invention. The optical fiber 125 may be coupled to a splitter 118a of the one or more splitters 118. In particular, the splitter 118a may be configured to split an optical signal in the optical fiber 125 into one or more optical fibers of the plurality of optical fibers 121. Moreover, the one or more optical fibers may be adapted to be received by the port gland 105a configured to couple the one or more optical fibers of the plurality of optical fibers 121 with the plurality of drop cables 110 connected to a terminal box (not shown) at the user's end by way of one or more connectors 119.

In accordance with an embodiment of the present invention, a volume of the high-density fiber enclosure 101 may be 4225-4240 milli meter cube (mm³), and a volume per drop cable of the plurality of drop cables 110 may be equal to 88 mm³.

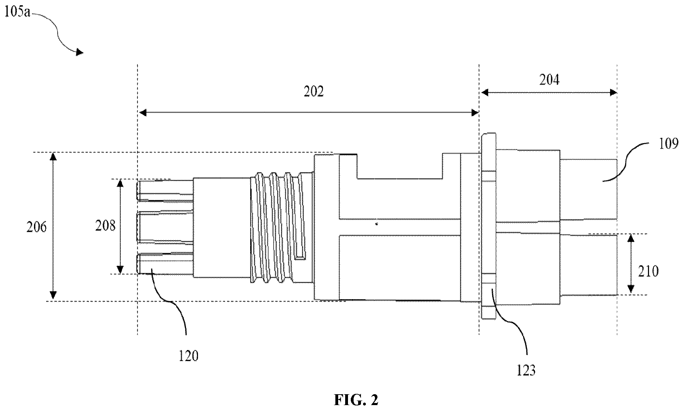

Fig. 2 is a pictorial snapshot illustrating a side view of the port gland in accordance with an embodiment of the present invention. The port gland 105a may have a first length 202, a second length 204, a first width 206, a second width 208, and a third width 210. In particular, the first length 202 may be a length of the port gland 105a from the plurality of fingers 120 on the port gland 105a to the shoulder 123 of the port gland 105a. Moreover, the first length 202 may be equal to 48.5 millimetres (mm). In alternative aspects of the present invention, the first length 202 may be equal to 75.5 mm.

The second length 204 is the length from the shoulder 123 of the port gland 105a to the one or more outlets 109 of the port gland 105a. In particular, the second length 204 may be equal to 19 mm. In alternative aspects of the present invention,the second length 204 may be different.

The first width 206 is the width of the connecting passage 108 and may be equal to 18 mm. The second width 208 is the width of the plurality of fingers 120 on the port gland 105a and may be equal to 12.3mm. Furtherm, the third width 210 is the width of either of the one or more outlets 109 and may be equal to 7.4 mm.

In different embodiments the first width 206 , second width 208 and the third width may be different.

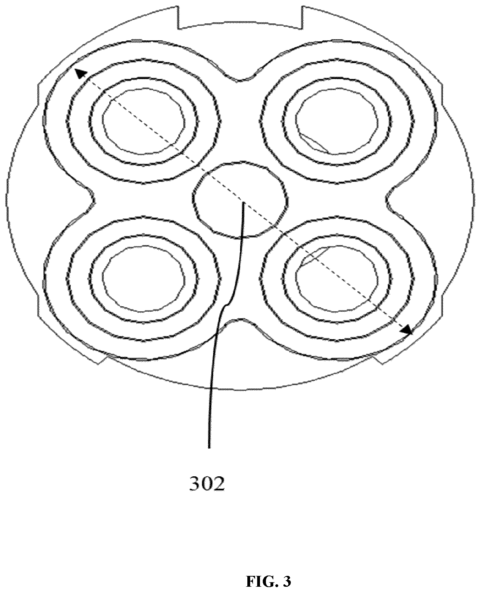

Fig. 3 is a pictorial snapshot illustrating a front expanded view of an output port in accordance with an embodiment of the present invention. The output port 104a may have a radius 302 such that a numerical value of the radius 302 of the output port 104a may be equal to 24 mm.

In accordance with an embodiment of the present invention, the one or more port glands 105 of the high-density fiber enclosure 101 may have one or more splitters 118 such that each port gland of the one or more port glands 105 may have a splitter of the one or more splitters 118. Each splitter of the one or more splitters 118 may be configured to split the optical signal into four signals. The four optical fibers of the plurality of optical fibers 121 may work as four inputs for the connecting passage 108 coupled to the high-density fiber enclosure 101. In particular, the connecting passage 108 may couple the four fibers of the plurality of optical fibers 121 with four LC adapters (not shown), SC connectors, or any other type of connectors, to work as drop cables 110. Moreover, the cylindrical sealing element 115 with the one or more longitudinal passages 117, at least one walled region 111, and the open peripheral zone 128 may enable accommodation and routing of each fiber of the four fibers of the plurality of optical fibers 121.

In accordance with an embodiment of the present invention, the high-density fiber enclosure 101 comprises a housing 102, one or more inlet ports 103 configured to receive one or more cables 122 in the housing 102 and one or more output ports 104 and one or more port glands 105 adapted to be inserted into the one or more output ports 104. In particular, each port gland of the one or more port glands 105 is configured to receive a plurality of drop fiber cables 110. Further, an output ratio of the high-density fiber enclosure 101 is less than 200.

In accordance with an embodiment of the present invention, each port gland of the one or more port glands 105 includes a first end 106 engaged with the one or more output ports 104, a second end 107, a connecting passage 108 between the first end 106 and second end 107 allow passage of a plurality of optical fibers. In particular, the plurality of drop fiber cables 110 is equal to a numerical count of the plurality of optical fibers 121.

In accordance with an embodiment of the present invention, each port gland of the one or more port glands 105 further comprises a shoulder 123 at the second end 107 to restrict an insertion of a port gland of the one or more port glands 105 into the output port 104 at a predefined position.

In accordance with an embodiment of the present invention, the connecting passage 108 has a plurality of longitudinal compartments 112 such that at least one longitudinal compartment of the plurality of longitudinal compartments 112 is configured to house exactly one optical fiber. Each longitudinal compartment of the plurality of longitudinal compartments 112 is separated from one another.

In accordance with an embodiment of the present invention, the second end 107 comprising a plurality of outlets 109 adapted to connect a plurality of drop cables 110.

In accordance with an embodiment of the present invention, each port gland of the one or more port glands 105 are cylindrical shaped and comprises the plurality of longitudinal compartments 112 that are separated from one another. Further, each port gland of the one or more port glands 105 comprises a threaded portion 113 at the first end 106 to removably engage the one or more port glands 105 inside the housing 102.

The high-density fiber enclosure has a housing with one or more inlet ports, one or more output ports, and port glands designed to receive multiple drop fiber cables. The design of the port glands, with varying areas and a connecting passage, ensures stable accommodation of optical fibers, meeting the numerical count requirements. In particular, the synergy lies in the design of the port glands, where the first end is embedded inside the output ports, providing stability. Further, the connecting passage with longitudinal compartments ensures organized housing of optical fibers. The second end with outlets facilitates connections for drop cables, creating a cohesive solution for high-density fiber enclosures.

Further, the high-density fiber enclosure in environments where optical fiber networks require high-density connectivity. The stable design of the enclosure makes it suitable for data centers, telecommunications facilities, or any scenario demanding efficient high-density fiber management.

The high-density fiber enclosure demonstrates versatility in addressing the challenges associated with increased network density. Its innovative features offer a stable and reliable solution for accommodating optical fiber cables in high-density environments, making it a valuable component in the evolution of optical communication networks.

Advantageously, the high-density fiber enclosure offers a stable solution specifically designed for high-density enclosures, ensuring reliable connectivity in optical fiber networks. Additionally, the high-density fiber enclosure provides benefits such as improved cable management, reduced insertion difficulties, and enhanced reliability in high-density optical fiber environments.

The high-density fiber enclosure 101 may provide one or more of, high-density optical fiber cable accommodation, compatible with existing fiber enclosures (or terminal boxes), and an ease of management of the plurality of drop cables 110.

While various aspects of the present invention have been illustrated and described, it will be clear that the present invention is not limited to these aspects only. Numerous modifications, changes, variations, substitutions, and equivalents will be apparent to those skilled in the art, without departing from the spirit and scope of the present invention, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. A high-density fiber enclosure (101) comprising:
a housing (102);
one or more inlet ports (103) configured to receive one or more cables (122) in the housing (102); and
one or more output ports (104);
one or more port glands (105) adapted to be inserted into the one or more output ports (104), each port gland of the one or more port glands (105) is configured to receive a plurality of drop fiber cables (110),
wherein each port gland of the one or more port glands (105) further comprising:
a first end (106) that is at least partially embedded inside the one or more output ports (104), wherein the first end (106) is defined by a first area (A1);
a second end (107) that is defined by a second area (A2), wherein the second area (A2) is greater than the first area (A1); and
a connecting passage (108) between the first end (106) and second end (107), wherein the connecting passage (108) is configured to allow passage of a plurality of optical fibers (121), such that a numerical count of a plurality of drop fiber cables (110) is equal to a numerical count of the plurality of optical fibers (121).

2. The high-density fiber enclosure (101) of claim 1, wherein the connecting passage (108) has a plurality of longitudinal compartments (112) such that each longitudinal compartment of the plurality of longitudinal compartments (112) is configured to house one optical fiber.

3. The high-density fiber enclosure (101) of claim 2, wherein each longitudinal compartment of the plurality of longitudinal compartments (112) is separated from one another.

4. The high-density fiber enclosure (101) of claim 2, wherein each longitudinal compartment of the plurality of longitudinal compartments (112) has at least one walled region (111) and an open peripheral zone (128) defining an area of the connecting passage (108).

5. The high-density fiber enclosure (101) of claim 1, wherein the second end (107) comprising a plurality of outlets (109) adapted to connect a plurality of drop cables (110).

6. The high-density fiber enclosure (101) of claim 1, wherein each port gland of the one or more port glands (105) are cylindrical shaped, and each port gland of the one or more port glands (105) comprising the plurality of longitudinal compartments (112) that are separated from one another.

7. The high-density fiber enclosure (101) of claim 1, wherein each port gland of the one or more port glands (105) further comprising a shoulder (123) at the second end (107) to restrict an insertion of a port gland of the one or more port glands (105) into the output port (104) at a predefined position.

8. The high-density fiber enclosure (101) of claim 1, wherein each port gland of the one or more port glands (105) further comprising a plurality of fingers (120) disposed on a periphery of the first end (106).

9. The high-density fiber enclosure (101) of claim 1, wherein the high-density fiber enclosure (101) further comprising a cylindrical sealing element (115) configured to be inserted into the plurality of fingers (120) of a port gland of the one or more port glands (105).

10. The high-density fiber enclosure (101) of claim 1, wherein each port gland of the one or more port glands (105) further comprising a threaded portion (113) at the first end (106) to removably engage the one or more port glands (105) inside the housing (102).

11. The high-density fiber enclosure (101) of claim 1, wherein the high-density fiber enclosure (101) further comprising one or more coupling nuts (114), and each coupling nut of the one or more coupling nuts (114) is adapted to be engaged with the threaded portion (113) of a port gland of the one or more port glands (105) to removably engage the port gland of the one or more port glands (105) inside the housing (102).

12. The high-density fiber enclosure (101) of claim 1, wherein an output ratio of the high-density fiber enclosure (101) is less than 200.

13. A high-density fiber enclosure (101) comprising:
a housing (102);
one or more inlet ports (103) configured to receive one or more cables (122) in the housing (102); and
one or more output ports (104);
one or more port glands (105) adapted to be inserted into the one or more output ports (104), each port gland of the one or more port glands (105) is configured to receive a plurality of drop fiber cables (110), wherein an output ratio of the high-density fiber enclosure (101) is less than 200.

14. The high-density fiber enclosure (101) of claim 13, wherein each port gland of the one or more port glands (105) comprising:
a first end (106) engaged with the one or more output ports (104), wherein the first end (106) is defined by a first area (A1);
a second end (107) that is defined by a second area (A2), wherein the second area (A2) is greater than the first area (A1); and
a connecting passage (108) between the first end (106) and second end (107), wherein the connecting passage (108) is configured to allow passage of a plurality of optical fibers (121), such that a numerical count of a plurality of drop fiber cables (110) is equal to a numerical count of the plurality of optical fibers (121).

15. The high-density fiber enclosure (101) of claim 13, wherein each port gland of the one or more port glands (105) further comprising a shoulder (123) at the second end (107) to restrict an insertion of a port gland of the one or more port glands (105) into the output port (104) at a predefined position.

16. The high-density fiber enclosure (101) of claim 14, wherein the connecting passage (108) has a plurality of longitudinal compartments (112) such that at least one longitudinal compartment of the plurality of longitudinal compartments (112) is configured to house exactly one optical fiber.

17. The high-density fiber enclosure (101) of claim 14, wherein each longitudinal compartment of the plurality of longitudinal compartments (112) is separated from one another.

18. The high-density fiber enclosure (101) of claim 13, wherein the second end (107) comprising a plurality of outlets (109) adapted to connect a plurality of drop cables (110).

19. The high-density fiber enclosure (101) of claim 13, wherein each port gland of the one or more port glands (105) are cylindrical shaped, wherein each port gland of the one or more port glands (105) comprising the plurality of longitudinal compartments (112) that are separated from one another.

20. The high-density fiber enclosure (101) of claim 13, wherein each port gland of the one or more port glands (105) further comprising a threaded portion (113) at the first end (106) to removably engage the one or more port glands (105) inside the housing (102).
